(19) Europäisches Patentamt
European Patent Office
Office européen des brevets

(11) **EP 1 944 328 A1**

(12) **EUROPEAN PATENT APPLICATION**

(43) Date of publication:
**16.07.2008 Bulletin 2008/29**

(51) Int Cl.:
*C08F 283/12* (2006.01)    *C08J 3/24* (2006.01)

(21) Application number: **07000510.3**

(22) Date of filing: **11.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Linde Aktiengesellschaft**
**80807 München (DE)**

(72) Inventors:
• **Hillerström, Anna**
**16937 Solna (SE)**
• **Kronberg, Bengt**
**11530 Stockholm (SE)**

(54) **Method for modifying silicone rubber**

(57) The invention relates to a A method to produce a hydrophilic composite material consisting of at least 20% per weight silicone rubber and at least 5% per weight of the polymerized form of a reactive organic monomer, characterized in that

a) a crosslinker and a photoinitiator are impregnated into said silicone rubber using a first organic solvent,
b) said monomer is impregnated into said silicone rubber using a second organic solvent,
c) the procedures a) and b) are carried out stepwise,
d) said monomer is polymerized by exposure to radiation.

Fig. 2

**Description**

The invention relates to a method to produce a hydrophilic composite material consisting of at least 20% per weight silicone rubber and at least 5% per weight of the polymerized form of reactive organic monomer.

Crosslinked polydimethyl siloxane (PDMS) is a very versatile material and can be used in several applications due to its highly interesting material properties. Since it is biocompatible it can preferably be used for biomedical applications. Crosslinked PDMS is also a flexible material due to Si-O-Si bonds in the repeating unit of the molecule. Besides it has high thermal and chemical stability as well as high oxygen permeability and transparency. The surface energy of PDMS is extremely low (16-22 mJ/m$^2$, which is approximately 10 units lower than that of other synthetic polymers) and if the material is to be used for biomedical applications it would be advantageous to increase the hydrophilicity of the surface in order to improve the biocompatibility.

Improving the surface wettability of PDMS is a challenge due to its extremely low surface energy but nevertheless today there exist several methods to modify PDMS in order to obtain a hydrophilic surface.

Some commonly used methods are based on surface modification, which still preserve the excellent bulk properties of PDMS. Corona treatment, plasma treatment, laser treatment and surface grafting are some of the methods included in this category. In some of these techniques it is difficult to preserve the hydrophilic surface since PDMS tends to turn the hydrophobic groups towards the surface. The surface modification methods may also increase manufacturing costs and require a more complicated procedure.

It is also possible to use bulk modification methods where polymer blends and copolymers are included. These techniques also have drawbacks, for example in polymer blends where phase separation usually takes place. For some applications phase separation is not a major concern but other goals like improving mechanical properties of the polymer blend is more interesting than obtaining a homogeneous material.

Another method for modifying PDMS is to form an interpenetrating polymer network (IPN). An IPN is a combination of two or more polymers in network form where physical entanglements of the polymer chains improve the stability in the bulk and surface of the IPN. According to the definition of an I PN at least one of the polymers should be synthesized and crosslinked in the presence of the other.

IPNs are classified according to the different routes of preparation. Either the IPN can be prepared simultaneously (SINs) or sequentially. In the latter method one polymer is in network form and the monomer of the second polymer is added to the first polymer matrix followed by polymerization and eventually crosslinking. Contrary to polymer blends and different type of copolymers an IPN swells in a solvent, but without dissolution, due to the network structure with crosslinks.

One of the advantages of using IPNs is the possibility to combine properties of different polymers, which usually are incompatible and can in many cases be an alternative to synthesizing a totally new polymer with the desired properties. Besides, in an IPN the degree of miscibility between the different polymers is enhanced due to the physical crosslinks between the polymer chains in comparison to regular polymer mixtures, the latter which usually show a large degree of phase separation.

In the present study, preparation of hydrophilic PDMS-IPN is investigated. As previously discussed, PDMS has a very low surface energy and it must be combined with a hydrophilic polymer to increase the surface energy. However, simultaneously all other favorable properties of PDMS should still be preserved. It is advantageous to form an IPN in comparison to formation of a PVP-film on the crosslinked PDMS due to weak adhesion between PVP and PDMS. The IPN improves the adhesion between the polymer chains and results in a more stable structure.

From the literature, there are some examples of studies of IPNs based on PDMS and another hydrophilic polymer. Liu et al, Biomaterials 2005, 26, (3), 233-244, describe the preparation of poly(N-isopropyl acrylamide) (PNIPAAM))/PDMS-IPN. This was achieved by swelling of the PDMS-film in a monomer solution followed by UV-curing polymerization. The resulting IPN showed an increase in hydrophilicity in comparison to pure PDMS (a decrease in contact angle was measured from 95° to 60°).

Abbasi et al, International Journal of Adhesion and Adhesives 2004, 24, (3), 247-257, report preparation of poly(hydroxyethyl methacrylate) (PHEMA)/PDMS-IPN using a sequential method to prepare the IPN. Crosslinked PDMS was immersed in a solution containing monomer, crosslinker and initiator followed by thermal polymerization. Contact angle measurement data of the PHEMA/PDMS-IPNs showed a decrease in contact angle (from 105° to 62°) as the content of PHEMA in the IPN increased.

Turner et al, Macromolecules 2003, 36, (6), 1962-1966, used another hydrophilic polymer, polymethacrylic acid (PMAA) and they formed an IPN by immersing the PDMS in the monomer followed by polymerization. The authors examined the morphology of the IPN by laser scanning confocal microscopy. It was concluded that the monomer immersion method resulted in a bicontinuous morphology where PMAA formed hydrophilic channels within the crosslinked PDMS.

Polyvinylpyrrolidone (PVP) is another highly water soluble polymer and is widely used in pharmacy, cosmetics and medicine due to its high biocompatibility. Crosslinked PVP is currently used in some biomedical applications such as contact lenses. In contact with water, crosslinked PVP forms a hydrogel with the ability to absorb large quantities of water, up to 60 % of its weight, depending on the degree of crosslinking. However, one of the drawbacks with hydrogels are their poor mechanical properties in the swollen state.

The object of the present invention is hence to form a hydrophilic surface of crosslinked PDMS by forming a homogenous film of PVP on the surface as well as crosslinking PVP inside the PDMS to form an IPN.

In general, it is an object of the invention to provide a method for modifying a silicone rubber containing composite material in order to increase the hydrophilicity of the surface.

This object is achieved by a method to produce a hydrophilic composite material consisting of at least 20% per weight silicone rubber and at least 5% per weight of the polymerized form of a reactive organic monomer, characterized in that

> a) a crosslinker and a photoinitiator are impregnated into said silicone rubber using a first solvent,
> b) said monomer is impregnated into said silicone rubber using a second solvent,
> c) the procedures a) and b) are carried out stepwise, and
> d) said monomer is polymerized by exposure to radiation.

Due to the large chemical difference between the silicone rubber and the polymerized form of the monomer this has to be achieved in a two-step process. The first step is to impregnate the silicone rubber, for example PDMS, with photoinitiator and crosslinker using a suitable first solvent. The second step is to submerge this pre-swollen and impregnated silicone rubber in a solution of monomer and a second solvent with subsequent polymerization. The reasons for using a two step procedure will be apparent further below.

The invention will now be explained with reference to the preparation of a PVP/PDMS-IPN. However, it is apparent for a man skilled in the art that the inventive two-step process can easily adapted to form interpenetrating polymer networks (IPNs) of other silicone rubber types and other monomers.

The invention as well as further details of the invention will now be explained with reference to the enclosed drawings wherein

figure 1    schematically shows the requirements of the solvent,
figure 2    schematically shows the synthesis procedure of PVP/PDMS-IPN,
figure 3a   shows the concentration of PVP in the PVP/PDMS-IPN as a function of NVP concentration,
figure 3b   shows the swelling of PVP/PDMS-IPN in water as a function of NVP concentration,
figure 3c   is a combination of 3a) and 3b) and shows the swelling in water versus concentration of PVP in the IPN. For the PVP/PDMS-IPNs toluene was used as solvent in the first step and mixtures of toluene and ethanol was used as solvents in the second step during the preparation. Filled symbols are representing hydrophilic PVP/PDMS-IPN and open symbols are representing hydrophobic PVP/PDMS-IPN.
Figure 4    shows a plot of a theoretical curve for the excess mole fraction of NVP (x1,s - x1) with increasing mole fraction of NVP. The filled line (-) corresponds to the PVP surface and the broken line (- - -) corresponds to the PDMS surface.
Figure 5    shows images from contact angle measurements with water for a) untreated PDMS and b) and c) PVP/PDMS-IPN. The water drop in b) does not spread on the surface of the sample since it turned hydrophobic. On the contrary, the water drop in c) spread totally due to a complete hydrophilic surface. The contact angle was measured in the wet state of the PVP/PDMS-IPN but after carefully drying the surface between tissue paper.
Table 1     shows the spreading coefficient S, calculated for different solutions.

**Thermodynamical background**

For the preparation of a hydrophilic PVP/PDMS-IPN two conditions have to be fulfilled;

> 1) the crosslinked PDMS has to be swelled to be able to impregnate monomer, photoinitiator and crosslinker into the network and
> 2) excess of PVP must cover the PDMS surface after the polymerization reaction to enable a water wettable surface. Regarding swelling of the crosslinked PDMS, the hydrophilic monomer alone has not the ability to sufficiently swell PDMS. Hence a suitable solvent with high swelling ability has to be selected. Since crosslinked PDMS is very nonpolar, the solvent should preferably also be nonpolar. The solubility parameter, $\delta$, is used as a very useful aid to find a suitable swelling solvent of PDMS. Swelling of a polymer network is best achieved with solvents that have solubility parameters close to that of the polymer. Since $\delta_{PDMS}$ is 14.9 MPa$^{1/2}$ solvents such as n-Hexane ($\delta$ = 14.9 MPa$^{1/2}$), cyclohexane ($\delta$ = 16.8 MPa$^{1/2}$) and toluene ($\delta$ = 18.2 MPa$^{1/2}$) are good candidates.

The possibility to obtain a surface that is wetted by water is more of a challenge. The solubility parameter of PVP is 21,5 MPa1/2 (NVP, δ = 21,5 MPa1/2), which is significantly higher than the solubility parameter of PDMS. In order to satisfy this condition the surface should have an excess of PVP. Since PDMS has a very low surface energy this is not easily obtained. Spreading of the PVP film on PDMS can only occur if there is an energy gain, i.e. the total surface energy is lower after the spreading of PVP. The condition for wetting of a PVP film on a PDMS surface in a solvent is that the spreading coefficient, S, should be positive (S ≥ 0), i.e.,

$$S = \gamma_{PDMS/solvent} - (\gamma_{PDMS/PVP} + \gamma_{PVP/solvent}) \geq 0 \tag{1}$$

where $\gamma_{ij}$ is the interfacial tension between the i and j phases. If the condition in Equation 1 is not fulfilled PVP will form droplets on the PDMS surface (S < 0).

In order to predict which solvents to be used, we will convert the interfacial tension of the components to solubility parameters. It can be shown that the interfacial tension between two components is proportional to the interaction parameter of the two components, i.e., the χ-parameter, according to:

$$\gamma = \frac{m}{a} kT\chi \tag{2}$$

where m is a constant, and denotes the plane above or below with nearest neighbors of molecules, a denotes the cross-sectional area per molecule and k and T have their usual significance. The x-parameter indicates the compatibility between the components and is a measure of the "antipathy" of the components. The X-parameter can be expressed in terms of the solubility parameter of the components (ref), viz.

$$\chi = \frac{V_1}{RT}(\delta_1 - \delta_2)^2 + \beta \tag{3}$$

Where $V_1$ is the molar volume of the solvent, R and T have their usual significance and β is a constant, which expresses the entropic contribution. A normal value of β is 0.34.

Combining Equations 1, 2 and 3 results in the following expression:

$$S = \frac{mkT}{a}\left[\frac{V_1}{RT}(\delta_{PDMS} - \delta_{Solvent})^2 + \beta_{PDMS/Solvent}\right] - \frac{mkT}{a}\left[\frac{V_1}{RT}(\delta_{PDMS} - \delta_{PVP})^2 + \beta_{PDMS/PVP}\right] - \frac{mkT}{a}\left[\frac{V_1}{RT}(\delta_{PVP} - \delta_{Solvnet})^2 + \beta_{PVP/Solvent}\right] \tag{4}$$

The expression can be further simplified since $V_1 = d^3 . N_A$ where $N_A$ is the Avgadro's constant. The volume of a molecule is assumed to be cubical with length d. Similarly a can be rewritten as $d^2$. After these simplifications Equation 4 can be expressed as:

$$S = md(\delta_{PDMS} - \delta_{Solvent})^2 + \frac{mkT}{a}\beta_{PDMS/Solvent} - md(\delta_{PDMS} - \delta_{PVP})^2 - \frac{mkT}{a}\beta_{PDMS/PVP} - md(\delta_{PVP} - \delta_{Solvent})^2 - \frac{mkT}{a}\beta_{PVP/Solvent} \tag{5}$$

**EXPAND**: Assume $\beta_{PDMS/Solvent} = \beta_{PVP/Solvent}$ and $\beta_{PDMS/PVP} = 0$ and the expression in Equation 5 will be further simplified. Finally the condition for spreading of PVP on PDMS can be rewritten as:

$$S = 2md(\delta_{PDMS} - \delta_{PVP})(\delta_{PVP} - \delta_{Solvent}) \geq 0 \qquad (6)$$

Since $\delta_{PDMS}$ and $\delta_{PVP}$ are constants and $\delta_{PDMS} < \delta_{PVP}$ we have the condition $\delta_{Solvent} \geq \delta_{PVP}$ in order for the condition $S \geq 0$ to be valid. Hence we have a useful tool to select candidates for solvents in order to be able to polymerize a PVP film at the interface of PDMS and solvent..

To obtain a hydrophilic PVP film on the PDMS surface the solvents used in the preparation step should be close to the solubility parameter of PVP i.e. polar solvents should be used. Another condition of the solvent is that it should dissolve the monomer, photoinitiator and crosslinker. However the polar solvents will not be able to swell PDMS but rather solvents with a solubility parameter close to PDMS are suitable.

To fulfill these two requirements a two step method to produce the PVP/PDMS-IPN is necessary. In the first step the oil-soluble components are impregnated into the crosslinked PDMS using an efficient swelling solvent for PDMS. In the second step a solution containing the hydrophilic monomer is added. Hence in the present experimental study an account for a two-step process is given. We thus have a tool for choosing a suitable solvent for the polymerization of PVP and at the same time obtaining a surface that is wetted by water.

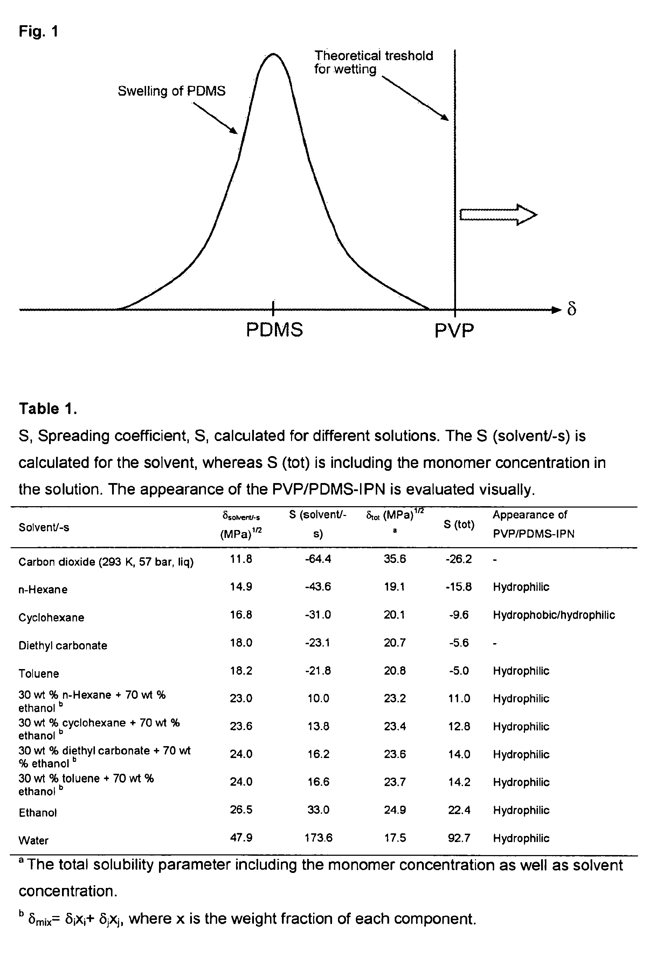

As previously discussed, the selection of the solvents is important and the conditions discussed in the thermodynamical background have to be fulfilled in order to obtain a hydrophilic PVP/PDMS-IPN. First the solvent should swell the PDMS to great extent, which occurs at a solubility parameter close to that of the PDMS and second the solvent should fulfill the requirement $\delta_{Solvent} \geq \delta_{PVP}$ in order to obtain a homogenous PVP-film on PDMS. This is illustrated in Figure 1 which schematically shows the requirements of the solvent that have to be fulfilled to obtain a hydrophilic PVP/PDMS-IPN. The selected solvent has to be able to swell PDMS, which occurs for 5 of the solvent close to PDMS. On the other hand the condition to form a PVP film on PDMS has to be fulfilled, i.e. ($\delta_{Solvent} > \delta_{PVP}$ indicated by the arrow in the figure.

## Examples:

### Materials

The PDMS used in this study was 0.51 mm thick elastomer sheeting with 50 shore A hardness (supplied by Mentor Corporation, Netherlands). The hydrophilic monomer used was N-vinyl-2-pyrrolidone, NVP (stabilized with 0.01 % NaOH, Aldrich, Germany). Irgacure 2100, which is a mixture of mono- and bis(2,4,6-trimethylbenzoyl)-phenylphosphineoxide (Ciba Speciality Chemicals, Switzerland), was used as a UV-sensitive photoinitiator. Triethyleneglycol dimethacrylate, TEGDMA (95 %, stabilized with approximately 80 ppm hydroquinone, Aldrich, Germany) was used as crosslinker in the free-radical polymerization of NVP. The solvents used in this study were toluene (p.a, Merck, Germany) and ethanol (99.7 %, Solveco Chemicals AB, Sweden), n-hexane (p.a, Merck, Germany), diethyl carbonate (99 %, Aldrich), cyclohexane (p.a, Merck, Germany) and distilled water.

### Synthesis procedure of PVP/PDMS-IPN

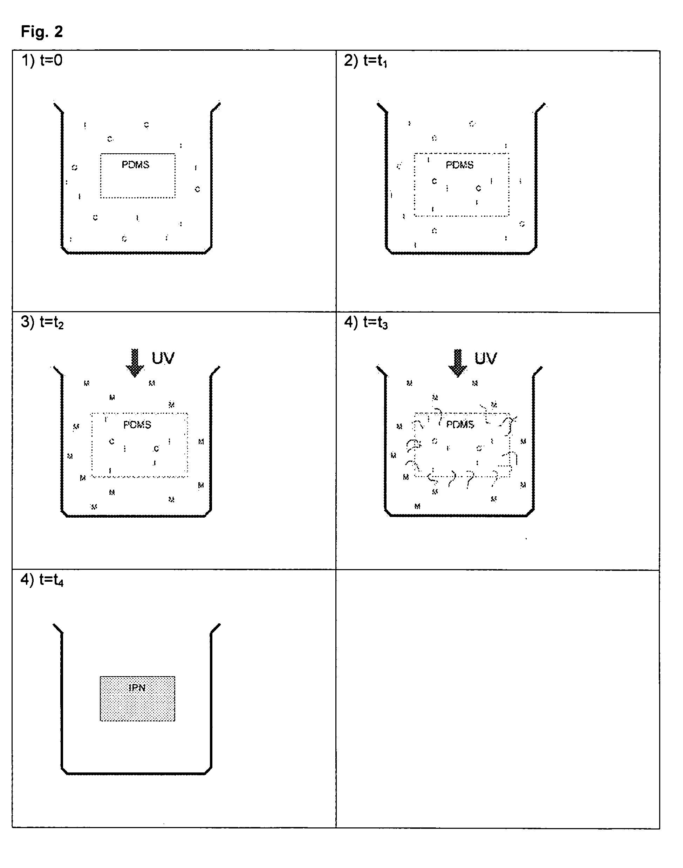

The experimental procedure to prepare a hydrophilic PVP/PDMS-IPN is schematically shown in Figure 2. Circular PDMS film strips of approximately 1 cm diameter were cut from the crosslinked PDMS film. The PDMS sample was immersed in a homogenous solution of 1g Irgacure 2100 (I), 1g TEGDMA (C) and 5g solvent. The selected solvents in this study have the ability to efficiently swell PDMS and photoinitiator (I) and crosslinker (C) were impregnated into the PDMS ($t=t_1$). The PDMS were soaked in the solution for one hour.

After swelling of PDMS in the first solution during one hour it was immersed in a second solution containing typically, 3g NVP (M), 2.1g ethanol and 0.9g solvent, see calculations below for selection of solvents. The ratio of ethanol and the second solvent was determined from swelling of the PDMS in different solutions of ethanol and solvent.

This was evaluated by visual inspection of PDMS samples in solution with different ratios of ethanol and solvent. It was determined that approximately 30 wt % of the swelling solvent was necessary to use to visually see the swelling of PDMS.

The free-radical polymerization reaction of NVP was immediately initiated by UV-light (200 W mercury-xenon lamp, LC-8, Hamamatsu, Japan) when the soaked PDMS sample was immersed in the monomer solution. The UV-intensity was measured with a light power meter (at 365 nm, model C6080-03, Hamamatsu, Japan) and was constant during the whole polymerization ($I = 300$ mW/cm$^2$). During the polymerization the PDMS sample was kept in the solution and quartz glass was used as a lid to avoid evaporation of solvents. UV-curing lasted for 60 - 90 minutes, which was shown to be a sufficient time to obtain a fully polymerized IPN. All experiments were carried out at room temperature.

The PVP/PDMS-IPN was placed in a container with distilled water for more than 24 hours in order to remove PVP that was not fully crosslinked. The water was replaced a couple of times during the extraction until no further weight decrease of the PVP/PDMS-IPN was observed. After extraction in water the samples were stored in water to preserve the hydrophilic surface.

As a reference control, some samples were prepared in one step, i.e the preswelling of PDMS with Irgacure 2100 and TEGDMA was excluded. Consequently all chemicals were mixed in one step and were impregnated during one hour followed by UV-polymerization. The PDMS sample was kept in the solution during the polymerization reaction. The final PVP/PDMS-IPN was immersed in water and treated similarly as the samples prepared with the two step method.

**Determination of PVP percentage and water content percentage in PVP/PDMS-IPN**

The amount of PVP in the PVP/PDMS-IPN was calculated from dry weights after extraction in water, as follows:

$$\% \, PVP = \frac{w_d - w_0}{w_0} \qquad (7)$$

Where $W_d$ is the weight of the dry PVP/PDMS-IPN extracted in water and $w_0$ is the initial weight of the PDMS film.

Dry PVP/PDMS-IPNs of known weight were immersed in an excess amount of distilled water at room temperature. After swelling of the PVP/PDMS-IPN in water for more than 24 hours and blotting the IPN between two sheets of dust-free tissue paper the water uptake in the PVP/PDMS-IPN was calculated as:

$$\% \, water \, uptake = \frac{w_s - w_d}{w_d} \qquad (8)$$

where $W_s$ is the weight of the PVP/PDMS-IPN after swelling in water.

**Contact angle measurements**

The hydrophilicity of the surface of the PVP/PDMS-IPN was mainly characterized by visual inspection since the PVP/PDMS-IPNs were stored in water and a hydrophilic surface resulted in total spreading by adding a drop of water on the surface. Swollen samples were withdrawn from water and a hydrophilic surface showed a wetting surface of water. Besides, some IPNs were analyzed by Dynamic Contact Angle and Absorption Tester, DAT (Fibro 1100, Fibro Systems, Sweden) where values of contact angles and images were obtained.

**Results and discussion**

**Selection of solvents**

Several PVP/PDMS-IPNs were investigated in the present study and they were prepared according to the preparation procedure described in the method part. Equation 6 was used for calculation of a suitable solvent mixture that will form a homogeneous film of PVP on the PDMS surface. Spreading coefficient, S, of different solvent combinations were calculated and they are listed in Table 1. For the calculations of mixtures it was assumed that the total solubility parameter, $\delta = \delta_A \phi_A + \delta_B \phi_B$. In our systems we have a large amount of NVP (up to 50 wt %) and, of course, the presence of NVP alters the solubility parameter of the mixture. This effect is shown in the last column in Table 1 and we realize that, thanks to the presence of NVP, there are more candidates for obtaining a hydrophilic PVP/PDMS-IPN.

**Characterization of PVP/PDMS-IPN**

The main advantage using the two step method for preparation of hydrophilic PVP/PDMS-IPN is that in the polymerization step Irgacure 2100 and TEGDMA will diffuse out of the crosslinked PDMS and simultaneously the NVP monomer will diffuse into the PDMS. This favors the formation of a hydrophilic IPN since the polymerization starts immediately after the sample is immersed into the monomer solution. If the PDMS sample was soaked in the monomer solution before initiation of the polymerization reaction this will only favor diffusion of Irgacure 2100 and TEGDMA into the monomer solution and as a result the monomer solution will be polymerized outside PDMS and the final IPN will contain less amount of PVP.

Samples prepared in the present study using the two step method appeared hydrophilic and contained 20-40 wt % of PVP in the PVP/PDMS-IPN. The concentration of PVP in the PVP/PDMS-IPN was calculated from Equation 7 after repeating the extraction in water a couple of times to remove any monomer residues.

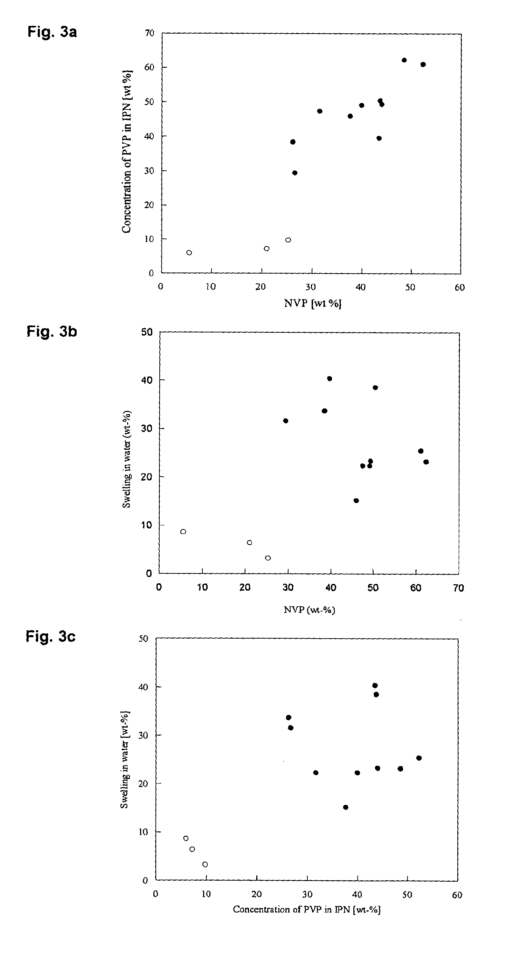

The samples in Figure 3 were prepared using toluene to swell the PDMS in the first step during the preparation. In the second step a mixture of toluene and ethanol was used. As can be seen in Figure 3, the PVP/PDMS-IPNs presented in are hydrophilic above a certain threshold of NVP concentration, which is ca 25 wt %. This is explained by weak adhesion between PVP and PDMS and this illustrates the difficulties of forming a permanent hydrophilic PDMS surface.

Another interesting observation is the fact that the surface of the PVP/PDMS-IPNs turned hydrophobic if they were not stored in water after polymerization. If the samples are kept in air, the hydrophobic groups (methyl groups) of PDMS migrate towards the air surface and hence the surface turns hydrophobic. The tendency for the hydrophobic methyl groups in PDMS to migrate out towards the surface of the IPN has been described by He et al, Polymer 1992, 33, (4), 866-71.

Their experiments concluded that the value of the surface energy of the IPN was similar to PDMS up to 80 wt % poly(methyl methacrylate) (PMMA) in PMMA/PDMS-IPN. This is explained by the low surface energy of PDMS. Our study shows, however, that this migration can be prevented of the samples are stored in water.

In addition, the swelling of the PVP/PDMS-IPN was calculated from Equation 8 and this is illustrated in Figure 3 c), which shows the swelling behavior of PVP/PDMS-IPN in water versus the concentration of PVP in the PVP/PDMS-IPN. It is interesting to note that the degree of swelling in water is linearly correlated to the concentration of PVP in the PVP/PDMS-IPN. Hence, the swelling behavior of hydrogels like PVP depends on the fraction of PVP in the PVP/PDMS-IPN. It is most likely also dependent on the degree of crosslinking.

Increasing the NVP concentration has a marked effect on the PVP concentration in the final PVP/PDMS-IPN as can be seen in Figure 3 a). Increasing the NVP concentration up to 62 wt % resulted in a linear increase in the PVP concentration in the PVP/PDMS-IPN. This also corresponded to a linear increase of swelling in water of the PVP/PDMS-IPN, as shown in Figure 3 b). Monomer solutions with a low content of NVP generated a hydrophobic PVP/PDMS-IPN. Other parameters that may have an effect during the preparation procedure are concentration of crosslinker- and photoinitiator, polymerization time and impregnation time in PDMS for the solutions.

Some samples were prepared where all components were mixed in one step, in order to make a comparison with the two-step method for preparation of PVP/PDMS-IPN. Those samples turned hydrophobic and the concentration of PVP in PVP/PDMS-IPN was much lower than with the two step method. Generally the concentration of PVP in the PVP/PDMS-IPN was not higher than 10 wt % using a one step preparation method. As mentioned earlier there appears to be a limiting PVP concentration (ca 25 wt %) in the PVP/PDMS-IPN according to Figure 3 where it is possible to obtain a hydrophilic surface. Using the one step method the limiting PVP concentration in the PVP/PDMS-IPN was not reached, thus the sample remained hydrophobic. Nevertheless, as can be seen in Figure 3, the swelling behavior of the PVP/PDMS-IPN prepared in one step also correlated linearly to the concentration of PVP in the PVP/PDMS-IPN.

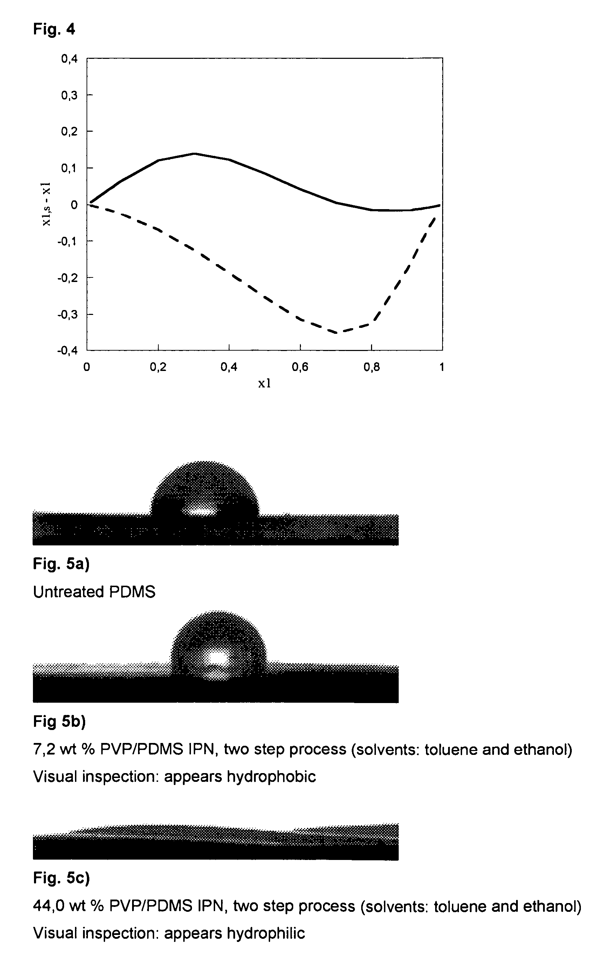

From the summary in Table 1 we conclude that many different solvent combinations offer the possibility to create hydrophilic PVP/PDMS-IPN. Calculations of the spreading coefficient for toluene, hexane and diethyl carbonate indicated a non-wetting surface of PVP but the experiments have proved the opposite. This shows the ability to stretch the limiting threshold where it is possible to obtain a hydrophilic PVP/PDMS-IPN. The schematic drawing of this idea is shown in Figure 1. Some PVP/PDMS-IPN samples were prepared where either toluene or ethanol was used in the second step and it was shown to be possible to form a water wettable surface. Other samples were prepared where water was used in the second step (one drop of toluene was added to the solution to prevent toluene in the swollen PDMS to diffuse out) and the PVP/PDMS-IPN successfully turned hydrophilic. Also some other solvents were used for preparation of the PVP/PDMS-IPN such as cyclohexane, diethyl carbonate and hexane. The samples appeared hydrophilic when hexane, cyclohexane or diethyl carbonate was used in the first step followed by hexane/cyclohexane/ diethyl carbonate with ethanol in the second step. Finally PVP/PDMS-IPN were prepared where cyclohexane or hexane was used in the second step and the PVP/PDMS-IPN turned hydrophilic, although calculations of the spreading coefficient, S, indicated that the surface of the PVP/PDMS-IPN would remain hydrophobic for those solvent combinations. These findings may seem contradictory, but one should take into consideration that the preparation procedure favors the formation of PVP on the PDMS surface due to the pre-swelling of photoinitiator and crosslinker in the PDMS. At the initiation of the polymerization reaction, there is an excess of solvent on the surface but as the polymerization reaction is progressing PVP/PDMS-IPN will start to propagate on the interface of PDMS and the solution. Hence, the condition will change and $\delta$ is shifted towards a higher value than the initial solution phase. At this point surface can be approximated to be covered with PVP. This is illustrated in Figure 4 where the difference in mole fraction of NVP on the surface and the solution phase $(x_{1,s} - x_1)$ is plotted versus the mole fraction of NVP in the solution phase $(x_1)$. Two different cases are illustrated in the graph. The first case shows the initiation of the polymerization reaction when there is a PDMS surface and the other case illustrates a later stage in the reaction when the surface is covered with PVP.

In general the hydrophilicity of the surface of the PVP/PDMS-IPN was simply characterized by withdrawing the sample from the container with water and visually studying the spreading behavior of water on the surface. Some examples are shown in Figure 5 where the untreated PDMS clearly appears hydrophobic but also some other PVP/PDMS-IPN with low content of PVP appeared hydrophobic. On the other hand PVP/PDMS-IPN with high content of PVP had a hydrophilic surface as shown in Figure 5 c). The PVP/PDMS-IPN was characterized as hydrophilic from visual inspection and this was confirmed from the contact angle measurements using DAT. The contact angle of a hydrophilic surface was even lower than the measurement range of the instrument.

The samples were extracted in water until no further weight decrease was observed after polymerization of the PVP/PDMS-IPN but the shelf-life stability of the samples were also investigated. The samples were stored in water for 2 months after preparation and the weight of the dry and wet PVP/PDMS-IPN was measured. It was noted that the weight of the samples decreased approximately 3 % and the swelling in water of the PVP/PDMS-IPN decreased by approximately 4 % but the samples still maintained the hydrophilic behavior.

## Conclusions

The present study shows that it is possible to prepare hydrophilic PVP/PDMS-IPN by using a two step method. The prepared PVP/PDMS-IPN samples were characterized by measuring the contact angle with water. An important parameter for the synthesis of PVP/PDMS-IPN is the selection of suitable solvents that will favor wetting of PVP on the PDMS surface. In this study several different solvent combinations were investigated based on thermodynamical calculations. It was found that a limiting threshold to obtain a hydrophilic surface of PVP on PDMS was $\delta_{solvent} \geq \delta_{PVP}$ but experiments concluded that the threshold could be stretched towards a lower value of the solubility parameter but still maintaining the hydrophilic surface. Another important condition that has to be fulfilled when selecting solvents is the swelling ability of PDMS in the solvents. Advantages using the two step method in the present study can be seen when comparing with samples prepared by mixing all chemicals in one step followed by polymerization.

## Claims

1. A method to produce a hydrophilic composite material consisting of at least 20% per weight silicone rubber and at least 5% per weight of the polymerized form of a reactive organic monomer, **characterized in that**

   a) a crosslinker and a photoinitiator are impregnated into said silicone rubber using a first organic solvent,
   b) said monomer is impregnated into said silicone rubber using a second organic solvent,
   c) the procedures a) and b) are carried out stepwise,
   d) said monomer is polymerized by exposure to radiation.

2. Method according to claim 1 **characterized in that** after step d) said composite material is cleaned from residual, not reacted chemicals using a third solvent.

3. Method according to any of claims 1 or 2 **characterized in that** step b) is carried out after step a).

4. Method according to any of claims 1 to 3 **characterized in that** said monomer and said crosslinker are polymerized.

5. Method according to any of claims 1 to 4 **characterized in that** said monomer is polymerized by exposure to UV light.

6. A method according to any of claims 1 to 5 **characterized in that** a hydrophilic monomer is impregnated into said silicone rubber, preferably a monomer selected from the group of carbon-carbon double bond containing chemicals, preferably vinyl compounds, acrylic compounds, vinylpyrrolidone, HEMA (hydroxyethylmethacrylic acid) or acrylates.

7. A method according to any of claims 1 to 6 **characterized in that** said crosslinker is selected from the group of polyfunctional compounds, preferably triethylene glycol dimethacrylate (TEGDMA).

8. A method according to any of claims 1 to 7 **characterized in that** said first solvent is an organic solvent, preferably selected from the group of apolar solvents, preferably hexane, cyclohexane, cyclopentane or toluene.

9. A method according to any of claims 1 to 8 **characterized in that** said second solvent is an organic solvent, preferably selected from the group of polar solvents, preferably ethanol or water.

10. A method according to any of claims 1 to 9 **characterized in that** said third solvent is non-toxic, preferably said third solvent is liquid or supercritical carbon dioxide.

11. A method according to any of claims 6 or 7 **characterized in that** said photoinitiator is capable of initiating the polymerization of said monomers, preferably said photoinitiator comprises bis(2,4,6,-trimethylbenzoyl)-phenylphosphine oxide.

12. The use of a product obtained by a method according to any of claims 1 to 11 as ophtalmological devices, in particular as a contact lense, or as medical device, in particular as a catheter for blood, urine or other bodily fluids, or as a medical implant, or as a technical device, in particular as a gasket or a membrane.

**Fig. 1**

**Table 1.**

S, Spreading coefficient, S, calculated for different solutions. The S (solvent/-s) is calculated for the solvent, whereas S (tot) is including the monomer concentration in the solution. The appearance of the PVP/PDMS-IPN is evaluated visually.

| Solvent/-s | $\delta_{solvent/-s}$ $(MPa)^{1/2}$ | S (solvent/-s) | $\delta_{tot}$ $(MPa)^{1/2}$ [a] | S (tot) | Appearance of PVP/PDMS-IPN |
|---|---|---|---|---|---|
| Carbon dioxide (293 K, 57 bar, liq) | 11.8 | -64.4 | 35.6 | -26.2 | - |
| n-Hexane | 14.9 | -43.6 | 19.1 | -15.8 | Hydrophilic |
| Cyclohexane | 16.8 | -31.0 | 20.1 | -9.6 | Hydrophobic/hydrophilic |
| Diethyl carbonate | 18.0 | -23.1 | 20.7 | -5.6 | - |
| Toluene | 18.2 | -21.8 | 20.8 | -5.0 | Hydrophilic |
| 30 wt % n-Hexane + 70 wt % ethanol [b] | 23.0 | 10.0 | 23.2 | 11.0 | Hydrophilic |
| 30 wt % cyclohexane + 70 wt % ethanol [b] | 23.6 | 13.8 | 23.4 | 12.8 | Hydrophilic |
| 30 wt % diethyl carbonate + 70 wt % ethanol [b] | 24.0 | 16.2 | 23.6 | 14.0 | Hydrophilic |
| 30 wt % toluene + 70 wt % ethanol [b] | 24.0 | 16.6 | 23.7 | 14.2 | Hydrophilic |
| Ethanol | 26.5 | 33.0 | 24.9 | 22.4 | Hydrophilic |
| Water | 47.9 | 173.6 | 17.5 | 92.7 | Hydrophilic |

[a] The total solubility parameter including the monomer concentration as well as solvent concentration.

[b] $\delta_{mix} = \delta_i x_i + \delta_j x_j$, where x is the weight fraction of each component.

**Fig. 2**

**Fig. 3a**

**Fig. 3b**

**Fig. 3c**

**Fig. 4**

**Fig. 5a)**

Untreated PDMS

**Fig 5b)**

7,2 wt % PVP/PDMS IPN, two step process (solvents: toluene and ethanol)

Visual inspection: appears hydrophobic

**Fig. 5c)**

44,0 wt % PVP/PDMS IPN, two step process (solvents: toluene and ethanol)

Visual inspection: appears hydrophilic

European Patent
Office

# EUROPEAN SEARCH REPORT

**Application Number**

EP 07 00 0510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 331 578 B1 (TURNER JOSEPHINE [CA] ET AL) 18 December 2001 (2001-12-18)<br>* column 1, line 39 - line 51 *<br>* column 9, line 39 - line 48; claims; examples * | 1-12 | INV.<br>C08F283/12<br>C08J3/24 |
| A | US 5 424 375 A (HE XIONGWEI [CN] ET AL) 13 June 1995 (1995-06-13)<br>* the whole document * | 1-12 | |
| A | FR 2 757 528 A (DOW CORNING [GB]) 26 June 1998 (1998-06-26)<br>* page 6, line 7 - line 29; claims * | 1-12 | |
| A | EP 0 643 083 A1 (ESSILOR INT [FR]) 15 March 1995 (1995-03-15)<br>* claims 9-19 * | 1-12 | |
| A | WO 2005/003237 A (NANON AS [DK]; KARTHAEUSER JOACHIM [SE]) 13 January 2005 (2005-01-13)<br>* claims; examples * | 1-12 | |

**TECHNICAL FIELDS SEARCHED (IPC)**

C08F
C08J

The present search report has been drawn up for all claims

| Place of search | Date of completion of the search | Examiner |
|---|---|---|
| Munich | 31 May 2007 | IRAEGUI RETOLAZA, E |

EPO FORM 1503 03.82 (P04C01)

## ANNEX TO THE EUROPEAN SEARCH REPORT
## ON EUROPEAN PATENT APPLICATION NO.

EP 07 00 0510

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2007

| Patent document cited in search report | | Publication date | Patent family member(s) | | Publication date |
|---|---|---|---|---|---|
| US 6331578 | B1 | 18-12-2001 | NONE | | |
| US 5424375 | A | 13-06-1995 | NONE | | |
| FR 2757528 | A | 26-06-1998 | NONE | | |
| EP 0643083 | A1 | 15-03-1995 | AT | 153038 T | 15-05-1997 |
| | | | DE | 69403166 D1 | 19-06-1997 |
| | | | DE | 69403166 T2 | 04-12-1997 |
| | | | FR | 2709756 A1 | 17-03-1995 |
| | | | JP | 7164553 A | 27-06-1995 |
| WO 2005003237 | A | 13-01-2005 | CN | 1813031 A | 02-08-2006 |
| | | | EP | 1644443 A1 | 12-04-2006 |
| | | | US | 2006148985 A1 | 06-07-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LIU et al.** *Biomaterials,* 2005, vol. 26 (3), 233-244
- **ABBASI et al.** *International Journal of Adhesion and Adhesives,* 2004, vol. 24 (3), 247-257
- **TURNER et al.** *Macromolecules,* 2003, vol. 36 (6), 1962-1966
- **HE et al.** *Polymer,* 1992, vol. 33 (4), 866-71